# EUROPEAN PATENT SPECIFICATION

(11) **EP 4 382 677 B1**
(45) Date of publication and mention of the grant of the patent: **15.04.2026**
(21) Application number: 22883419.8
(22) Date of filing: 11.10.2022
(51) Int. Cl.: E02F 9/20, B01D 35/02, B01D 35/143, B01D 37/04, E02F 9/22, E02F 9/26

(54) **CLOGGING CALCULATION SYSTEM, CLOGGING CALCULATION METHOD, AND CLOGGING CALCULATION PROGRAM**
VERSTOPFUNGSBERECHNUNGSSYSTEM, VERSTOPFUNGSBERECHNUNGSVERFAHREN UND VERSTOPFUNGSBERECHNUNGSPROGRAMM
SYSTÈME, PROCÉDÉ ET PROGRAMME DE CALCUL DE COLMATAGE

(30) Priority: 19.10.2021 JP 2021171194
(43) Date of publication of application: 12.06.2024
(73) Proprietor: KOBELCO CONSTRUCTION MACHINERY CO., LTD., Hiroshima-shi, Hiroshima 731-5161 (JP)
(72) Inventor: YANAGIBASHI, Kosuke, Hiroshima-shi, Hiroshima 731-5161 (JP); TERAUCHI, Kenichi, Hiroshima-shi, Hiroshima 731-5161 (JP); TSUCHIHARA, Tatsuya, Hiroshima-shi, Hiroshima 731-5161 (JP); IWASAKI, Kazuhiro, Hiroshima-shi, Hiroshima 731-5161 (JP); NAKAGAWA, Tomohiro, Hiroshima-shi, Hiroshima 731-5161 (JP); HAMAMOTO, Ryo, Hiroshima-shi, Hiroshima 731-5161 (JP)
(74) Representative: TBK
(86) International application number: PCT/JP2022/037934
(87) International publication number: WO 2023/068115

(56) References cited:
- WO-A1-2012/023229
- WO-A1-2012/023229
- WO-A1-2020/027135
- JP-A- 2008 232 244
- JP-A- 2008 267 395
- JP-A- 2020 020 397
- JP-A- 2020 159 307
- JP-B2- 6 002 064
- KR-A- 20080 095 682
- US-B2- 10 179 368

## Description

### Technical Field

The present invention relates to a clogging calculation system, a clogging calculation method, and a clogging calculation program, for calculating the degree of clogging of a filter through which hydraulic fluid passes.

### Background Art

Patent Literature 1 discloses a technique for judging the degree of clogging of a filter of a construction machine. The technique includes sensing a differential pressure (pressure loss) across the filter and deciding that hydraulic fluid is contaminated with excess of foreign matter when a variation with time in the differential pressure exceeds an acceptable value.

The technique requires constant detection and storage of the differential pressure (pressure loss) across the filter, involving enormous data to be handled. Besides, the flow rate through the filter is not absolutely stable during the detection of the front-rear differential pressure, which hinders the degree of clogging of the filter from being accurately calculated.
Further background is disclosed in US 10 179 368 B2 "Wire electric discharge machine having estimation function for filter replacement timing", KR 2008/0095682 A "Apparatus for Monitoring Water Purifier Using Pressure Sensor", and WO 2020/027135 A1 "Work Machine".

### Citation List

### Patent Literature

Patent Literature 1: Japanese Unexamined Patent Publication No. 2008-232244

### Summary of Invention

It is an object of the present invention to provide a clogging calculation system, a clogging calculation method and a clogging calculation program, each of which is capable of accurately calculating the degree of clogging of a filter with reduced amount of data to be handled.

Provided is a clogging calculation system for calculating a degree of clogging of a filter through which hydraulic fluid for operating a hydraulic actuator of a work machine passes. The system includes a differential pressure detector for detecting a filter differential pressure that is a differential pressure across the filter, and a controller. The controller stores a judgment permission condition. The judgment permission condition includes a flow rate condition that a flow rate of hydraulic fluid passing through the filter exceeds a predetermined flow rate threshold. The controller calculates a judgment permission time and a judgment target time. The judgment permission time is an integrated value of time in which the judgment permission condition is satisfied. The judgment target time is an integrated value of time in which the judgment permission condition is satisfied and the differential pressure detected by the differential pressure detection unit exceeds a predetermined differential pressure threshold. The controller calculates a clogging degree, which indicates a degree of clogging of the filter, based on a comparison between the judgment permission time and the judgment target time.

Also provided is a method for calculating a degree of clogging of a filter through which hydraulic fluid for operating a hydraulic actuator of a work machine passes. The method includes: a differential pressure acquisition step of acquiring, by a differential pressure detection unit, the filter differential pressure; a judgment permission time calculation step, by a controller, of calculating the judgment permission time; a judgment target time calculation step of calculating, by the controller, the judgment target time; and a clogging degree calculation step of calculating, by the controller, the clogging degree based on a comparison between the judgment permission time and the judgment target time.

Also provided is a computer program comprising instructions to cause the above system to execute the steps of the above method, and a computer-readable medium having stored thereon the computer program.

### Brief Description of Drawings

FIG. 1 is a side view of a work machine according to an embodiment of the present invention.
FIG. 2 is a block diagram showing major components of the work machine and a clogging calculation system to be applied thereto.
FIG. 3 is a flowchart showing an arithmetic control operation performed by a controller included in the clogging calculation system.
FIG. 4 shows a display provided by a display unit shown in FIG. 2.

### Detailed Description

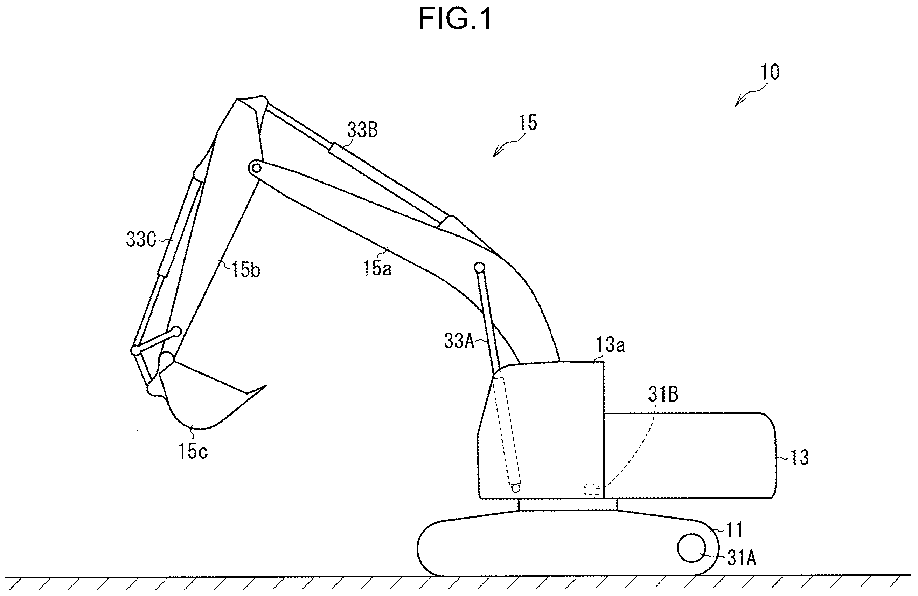

There will be described a preferred embodiment of the invention with reference to FIGS. 1 to 4.

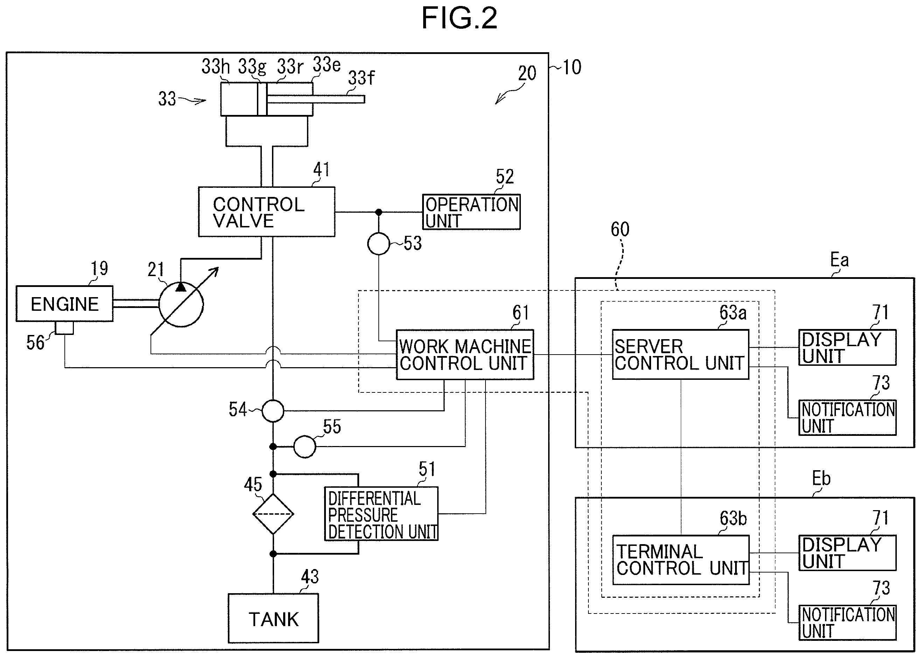

FIG. 1 shows a work machine 10 according to the present embodiment, and FIG. 2 shows primary components of the work machine 10 and a clogging degree calculation system to be applied thereto.

The work machine according to the present invention is a machine to perform a work, for example, a construction machine that performs a construction work, and may be, for example, either an excavator or a crane. The work machine 10 shown in FIG. 1 is a hydraulic excavator, including a lower traveling body 11, an upper turning body 13, and an attachment 15.

The lower traveling body 11 is capable of traveling on the ground, including a pair of crawlers. The lower traveling body 11 may include a plurality of wheels instead of the pair of crawlers.

The upper turning body 13 is mounted on the lower traveling body 11 capably of making a turning motion of turning with respect to the lower traveling body 11. The upper turning body 13 includes a cab 13a. The cab 13a allows an operator to perform operations of the work machine 10 in the cab 13a. The operation of the work machine 10 is not limited to an operation to be performed in the cab 13a; it may be, for example, a remote operation performed at a location remote from the work machine 10. Alternatively, the work machine 10 may be automatically operated.

The attachment 15 is a work device to be attached to the upper turning body 13 capably of making a work motion. The attachment 15 according to the present embodiment includes a boom 15a, an arm 15b and a tip attachment 15c. The boom 15a is attached to the upper turning body 13 capably of being raised and lowered (vertically rotated). The arm 15b is attached to the boom 15a vertically rotatably with respect to the boom 15a. The tip attachment 15c is vertically rotatably attached to the arm 15b to form the tip of the attachment 15. The tip attachment 15c shown in FIG. 1 is a bucket for scooping earth and sand; alternatively, it may be a device for sandwiching an object (such as a grapple) or a device for crushing an object (such as a breaker).

As shown in FIG. 2, the work machine 10 further includes an engine 19 as a drive source, a hydraulic circuit 20, a differential pressure detection unit 51, an operation unit 52, an operation amount detection unit 53, a flow rate detection unit 54, a hydraulic fluid temperature detection unit 55, an engine speed detection unit 56, and a controller 60.

The hydraulic circuit 20 is a circuit for hydraulically actuating the work machine 10 by use of the engine 19 as a power source. The hydraulic circuit 20 includes a hydraulic pump 21, a plurality of hydraulic actuators, a plurality of control valves 41, a tank 43 and a filter 45.

The hydraulic pump 21 is driven by the engine 19, thereby discharging hydraulic fluid to be supplied to the plurality of hydraulic actuators. The hydraulic pump 21, in the present embodiment, has a variable capacity. The hydraulic pump discharges hydraulic fluid by a discharge amount that is proportional to the product of the rotation speed of the hydraulic pump 21 and the capacity.

The plurality of hydraulic actuators are driven by hydraulic fluid discharged from the hydraulic pump 21 so as to actuate respective movable parts of the work machine 10. The plurality of hydraulic actuators include a plurality of hydraulic motors and a plurality of hydraulic cylinders 33.

Each of the hydraulic motors is rotationally driven by supply of hydraulic fluid thereto to rotate a driving target. The plurality of hydraulic motors include a pair of traveling motors 31A and a turning motor 31B shown in FIG. 1. The pair of traveling motors 31A actuate the pair of crawlers of the lower traveling body 11, respectively, to make the lower traveling body 11 perform a traveling motion. The turning motor 31B turns the upper turning body 13 with respect to the lower traveling body 11.

Each of the hydraulic cylinders 33 is expanded and contracted by supply of hydraulic fluid thereto to actuate a driving target. Each of the hydraulic cylinders 33 is a single rod type and double acting cylinder. Specifically, each of the hydraulic cylinders 33 includes a tube 33e, a rod 33f, a piston 33g, a head chamber 33h, and a cap chamber 33i, as shown in FIG. 2.

The plurality of hydraulic cylinders 33 include a plurality of work cylinders, namely, a boom cylinder 33A, an arm cylinder 33B, and a tip attachment cylinder 33C shown in FIG. 1.

The boom cylinder 33A is arranged so as to raise and lower the boom 15a with respect to the upper turning body 13. Specifically, the expansion motion of the boom cylinder 33A causes the boom 15a to perform a boom rising motion which involves the rise of the tip of the boom 15a, and the contraction motion of the boom cylinder 33A causes the boom 15a to perform a boom falling motion which involves the fall of the tip of the boom 15a.

The arm cylinder 33B is arranged so as to vertically rotate the arm 15b with respect to the boom 15a. Specifically, the expansion motion of the arm cylinder 33B causes the arm 15b to perform an arm crowding motion which is a rotational motion involving the movement of the tip of the arm 15b toward the boom 15a, and the contraction motion of the arm cylinder 33B causes the arm 15b to perform an arm dumping motion which is a rotational motion involving the movement of the tip of the arm 15b away from the boom 15a.

The tip attachment cylinder 33C is arranged so as to vertically rotate the tip attachment 15c with respect to the arm 15b. Specifically, the expansion motion of the tip attachment cylinder 33C causes the tip attachment 15c to perform a rotational motion which involves the movement of the tip of the tip attachment 15c toward the upper turning body 13, and the contraction motion of the tip attachment cylinder 33C causes the tip attachment 15c to perform a rotational motion which involves the movement of the tip of the tip attachment 15c away from the upper turning body 13. In the case where the tip attachment 15c itself is capable of performing a specific motion, for example, a motion of sandwiching an object, the plurality of hydraulic actuators may further include a hydraulic actuator for making the tip attachment 15c itself perform the specific motion.

As shown in FIG. 2, the tube 33e forms the main body of the hydraulic cylinder 33. The piston 33g is housed in the tube 33e capably of reciprocating axially of the tube 33e, partitioning the space in the tube 33e into a head chamber 33h and a rod chamber 33r. The head chamber 33h is a space opposite to the rod 33f across the piston 33g, and the rod chamber 33r is a space allowing the rod 33f to penetrate therethrough. By supply of hydraulic fluid to the head chamber 33h, the hydraulic cylinder is expanded with discharge of hydraulic fluid from the rod chamber 33r. By supply of hydraulic fluid to the rod chamber 33r, the hydraulic cylinder is made perform a contraction operation with discharge of hydraulic fluid from the head chamber 33h. Since the head chamber 33h has a cross-sectional area larger than the cross-sectional area of the rod chamber 33r by the cross-sectional area of the rod 33f, the discharge flow rate, which is the flow rate of the hydraulic fluid discharged from the hydraulic cylinder during the contraction motion of the hydraulic cylinder, is greater than the discharge flow rate during the expansion motion of the hydraulic cylinder (e.g., about two times).

The plurality of control valves 41 are provided for the plurality of hydraulic actuators, respectively, configured to perform valve opening motion to allow the direction and flow rate of hydraulic fluid supplied from the hydraulic pump 21 to the plurality of hydraulic actuators to be controlled, respectively. Each of the control valves 41 may be either a pilot-operated hydraulic selector valve that is opened in response to a pilot pressure which is input to the control valve 41 or a solenoid valve that is opened in response to an electrical signal which is input to the control valve 41.

The tank 43 stores hydraulic fluid discharged by the hydraulic pump 21 to operate the plurality of hydraulic actuators.

The filter 45 filters hydraulic fluid. Specifically, the filter 45 captures foreign matter (dust, iron powder, etc.) contained in the hydraulic fluid while allowing the hydraulic fluid to pass through the filter 45. The hydraulic fluid passing through the filter 45, in the present embodiment, is hydraulic fluid returned from the plurality of hydraulic actuators to the tank 43, namely, return fluid. The hydraulic fluid that passes through the filter 45, alternatively, may be the hydraulic fluid that is discharged from the hydraulic pump 21 and returned to the tank 43 while bypassing the hydraulic actuator 30.

The differential pressure detection unit 51 detects a filter differential pressure which is the differential pressure across the filter 45. The filter differential pressure detected by the differential pressure detection unit 51 is, specifically, the difference between the pressure on the upstream side (inlet side) and the pressure on the downstream side (outlet side) of the filter 45, that is, the pressure loss. If the pressure on the downstream side of the filter 45 is already known, the differential pressure detection unit 51 only has to detect the upstream pressure out of the respective actual pressures on the upstream side and the downstream side of the filter 45. Also in this mode, the differential pressure detection unit can determine the filter differential pressure.

The differential pressure detection unit 51 can be composed of, for example, a pressure detection switch. The pressure switch is switched on (outputs an ON signal) when the filter differential pressure exceeds a predetermined threshold (a differential pressure threshold), while the pressure switch is switched off (outputs no ON signal) when the filter differential pressure is equal to or less than the differential pressure threshold. The differential pressure threshold is arbitrarily set. The differential pressure threshold may be almost the same as atmospheric pressure, for example, 0.1 MPa. A typical pressure detection switch, having higher accuracy than that of pressure sensors, can make a judgment on whether the filter differential pressure is 0.1 MPa or less with higher accuracy than pressure sensors.

The differential pressure detection unit 51, alternatively, may be a pressure sensor capable of determining a pressure value. The differential pressure detection unit 51 may be configured to either output the difference between the pressure on the upstream side and the pressure on the downstream side of the filter 45 or input the upstream pressure and the downstream pressure of the filter 45 individually to the controller 60. In this case, the controller 60 is configured to perform: calculating the difference between respective pressures on the upstream side and the downstream side as the filter differential pressure; storing the differential pressure threshold; and judging whether or not the calculated filter differential pressure exceeds the differential pressure threshold. Also in this mode, the filter differential pressure can be determined by the differential pressure detection unit 51.

The operation unit 52 allows a plurality of operations for actuating the work machine 10 to be applied to the operation unit 52 by an operator. The plurality of operations for actuating the work machine 10 are, in other words, operations for operating the plurality of hydraulic actuators, respectively, including respective operations for operating the traveling motor 31A, the turning motor 31B, the boom cylinder 33A, the arm cylinder 33B, and the tip attachment cylinder 33C. The operation unit 52 is disposed in the cab 13a. The operation unit 52, alternatively, may be disposed outside the cab 13a. The operation unit 52 do not have to be a component of the work machine 10. The part to which the operation is applied in the operation unit 52 may be either an operation lever or an operation pedal.

The operation unit 52 generates an operation signal corresponding to the operation applied to the operation unit 52 and outputs it. The operation signal may be either a hydraulic signal or an electrical signal. In the present embodiment, the operation unit 52 is composed of a remote-control valve that inputs a pilot pressure corresponding to the operation to the control valve 41. The operation unit 52, alternatively, may be an electric lever device that generates an electrical signal corresponding to the operation and inputs the electrical signal to the controller 60. In this case, the controller 60 inputs a valve opening command corresponding to the electric signal input from the operation unit 52 to the control valve 41 or a solenoid valve connected to the control valve 41.

The operation amount detection unit 53 detects an operation amount in the operation unit 52. The operation amount is the magnitude of the operation applied to the operation unit 52. For example, the operation amount detection unit 53 includes a sensor that directly detects a physical movement amount of a movable part that is moved by the operation applied to the operation unit 52. For example, in the case where the movable part is an operation lever or an operation pedal, the operation amount detection unit 53 includes a sensor for detecting an angle of the operation lever or a depression amount of the operation pedal. In the case where the operation unit 52 outputs a pilot pressure corresponding to the operation, the operation amount detection unit 53 may include a pressure sensor that detects the pilot pressure. In the case where the operation unit 52 outputs an electric signal corresponding to the operation, the operation amount detection unit 53 may include a sensor for detecting the electric signal. The operation amount detection unit 53, alternatively, may be either composed of the controller 60 or configured to acquire information on the operation amount that is input from the operation unit 52 to the controller 60.

The flow rate detection unit 54 detects the flow rate of the hydraulic fluid passing through the filter 45. The hydraulic fluid temperature detection unit 55 detects the temperature of the hydraulic fluid passing through the filter 45. The flow rate detection unit 54 and the hydraulic fluid temperature detection unit 55 may be provided either in the filter 45 or in a pipe connected to the filter 45.

The engine speed detection unit 56 detects the number of revolutions of the engine 19. The engine speed detection unit 56 may be either included in the controller 60 or configured to be independent of the controller 60. The engine speed detection unit 56 may be configured to either acquire a command input from the controller 60 to the engine 19 for the rotational speed of the engine 19 or directly detect the rotational speed of the driving shaft of the engine 19.

The controller 60 constitutes a clogging calculation system in association with the differential pressure detection unit 51 and the operation amount detection unit 53. The controller 60 includes a computer that performs input/output of signals, arithmetic operation (processing), storage of information, and so on. The controller 60 includes, for example, an operation section and a storage section, and the operation section executes the program stored in the storage section to thereby achieve the function of the controller 60.

The controller 60 includes one or more control units. In the case of the controller 60 including the plurality of control units, the plurality of control units may be distributed in a plurality of locations, for example, the work machine 10 and an external device, that is, in the present embodiment, a server Ea and a terminal device Eb shown in FIG. 2.

The controller 60 according to the present embodiment includes a plurality of control units shown in FIG. 2, namely, a work machine control unit 61 installed on the work machine 10 and a plurality of external control units, which units include a server control unit 63a and a terminal control unit 63b.

The work machine control unit 61 is installed on the work machine 10. The work machine control unit 61 receives detection signals which are output from a plurality of detection units, and the plurality of detection units include the differential pressure detection unit 51 and the operation amount detection unit 53. The work machine control unit 61 inputs a rotation speed command to the engine 19 and inputs a capacity command to the hydraulic pump 21. The work machine control unit 61 further inputs commands to a plurality of devices, for example, the control valve 41 or a solenoid valve connected to the control valve 41, in accordance with the operation applied to the operation unit 52 or other conditions.

The external control unit is provided in the external device. The external device is a device provided outside the work machine 10, including, in the present embodiment, the server Ea and the terminal device Eb capable of communication with the server Ea. The terminal device Eb is composed of, for example, a personal computer, a tablet, or a smartphone. The external control unit makes communication with the work machine control unit 61. The communication may include any of wired communication, wireless communication, and optical communication.

In the present embodiment, the external device includes the server Ea and the terminal device Eb, wherein the server control unit 63a is provided in the server Ea and the terminal control unit 63b is provided in the terminal device Eb. The work machine control unit 61 and the server control unit 63a make mutual communication, and the server control unit 63a and the terminal control unit 63b make mutual communication. The work machine control unit 61 and the terminal control unit 63b may make mutual communication directly not through the server control unit 63a. Details of the operation of the controller 60 will be described later.

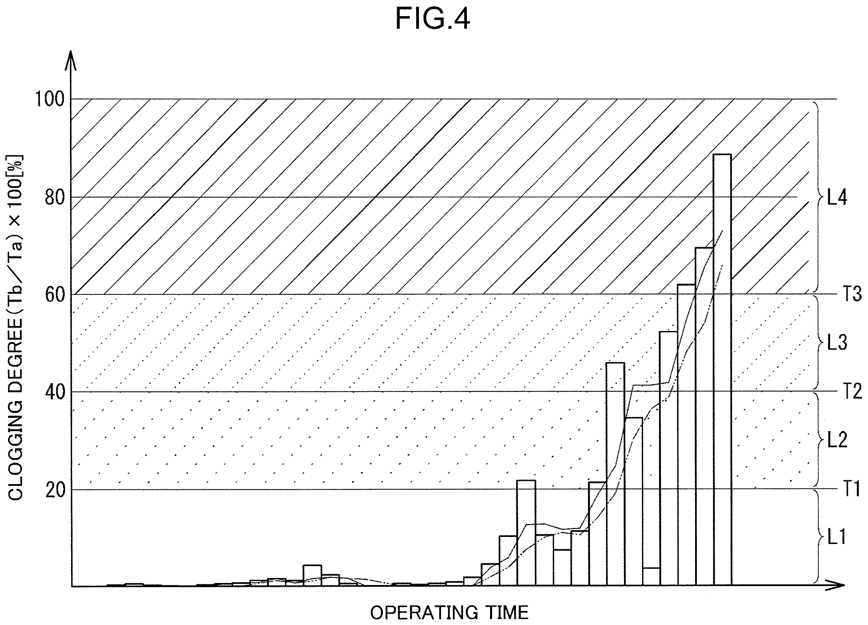

The display unit 71 displays information about the state of the work machine 10. The information includes information on a clogging degree that is a degree of clogging of the filter 45, and the display unit 71 displays the information to visualize it. The display unit 71 preferably displays the relationship between the clogging degree and time, as will be specifically described later with reference to FIG. 4. The display unit 71, for example, a monitor, performs a display according to the command that is input from the controller 60 to the display unit 71.

The notification unit 73 performs notification according to the command that is input from the controller 60. The notification preferably includes at least one of notification by light, notification by display, and notification by sound. The display unit 71 may be used as also a notification unit for performing notification by display.

Each of the display unit 71 and the notification unit 73 may be provided outside the work machine 10, for example, in the external device (the server Ea or the terminal device Eb in the present embodiment). Each of the display unit 71 and the notification unit 73, when provided outside the work machine 10, enables an operator outside the work machine 10 (e.g., a manager of the work machine 10) to easily grasp the state of the work machine 10 including the state of the filter 45 at the outside of the work machine 10 (e.g., a remote location). This allows management of the work machine 10 to be rendered efficient. Each of the display unit 71 and the notification unit 73 may be provided in the work machine 10, for example, inside the cab 13a. Each of the display unit 71 and the notification unit 73, when provided in the work machine 10, enables an operator of the work machine 10 to notice the state of the work machine 10 quickly (e.g., even during operation of the work machine 10). This allows the time taken for replace, repair, etc. of the filter 45 to be reduced. Each of the display unit 71 and the notification unit 73 may be provided on both the work machine 10 and the outside of the work machine 10.

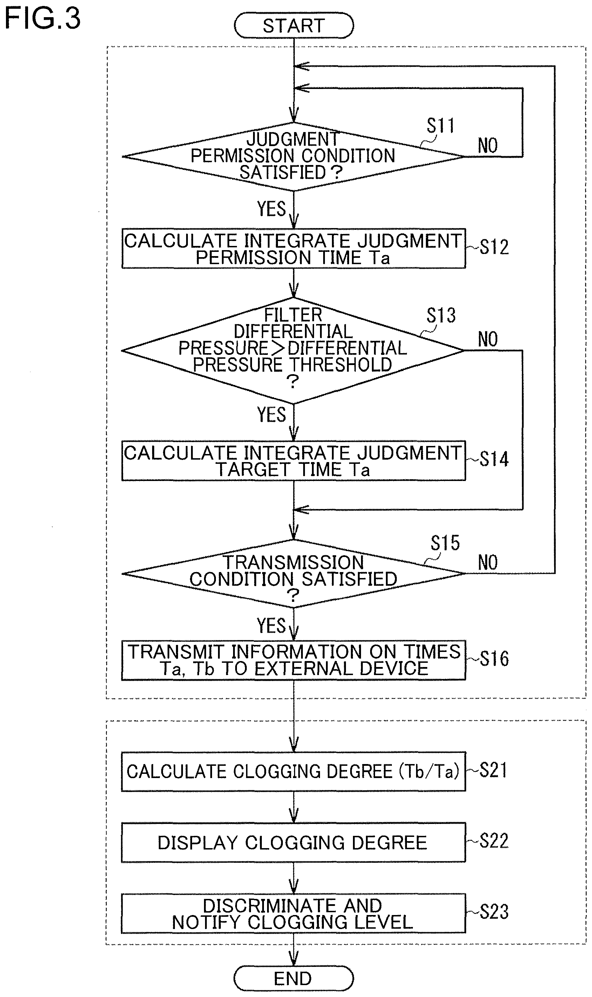

Next will be described the action of the clogging judgment system, that is, the clogging judgment method executed by the clogging judgment system, with reference to the flowchart shown in FIG. 3.

To execute steps S11 to S23 shown in FIG. 3, the controller 60 stores preset judgment permission condition.

In step S11, the controller 60 decides whether or not the judgment permission condition is satisfied (judgment-permission-condition decision step). For example, among the plurality of steps shown in FIG. 3, it is preferable that the processing of step S11 and steps S12 to S16 described below are executed by the work machine control unit 61 whereas steps S21 to S23 are executed by the external control unit (the server control unit 63a or the terminal control unit 63b).

The judgment permission condition is a condition that is set for accurate calculation of the degree of clogging of the filter 45, and only the filter differential pressure when the judgment permission condition is satisfied is adopted to the calculation of the clogging degree. The judgment permission condition includes at least a flow rate condition, and other conditions than the flow rate condition are optional.

The flow rate condition is that the filter flow rate, which is the flow rate of the hydraulic fluid passing through the filter 45, exceeds a predetermined flow rate threshold. Specifically, the flow rate condition is decided to be satisfied when the excess of the filter flow rate over the flow rate threshold is directly or indirectly detected. The "flow rate threshold" is preferably set based on the rated flow rate of the hydraulic pump 21. In this case, the flow rate threshold may be either a value substantially equal to the rated flow rate of the hydraulic pump 21 or a flow rate greater than the rated flow rate. The flow rate threshold is stored in the controller 60 in advance.

The reasons why the judgment permission condition should include the flow rate condition are as follows:
Reason 1: The flow rate condition makes it possible to reduce the influence by the filter flow on the calculation of clogging degree. The clogging degree calculation by the clogging judgment system 1 is performed on the basis of the filter differential pressure, which is also dependent on the filter flow rate. It allows the accuracy of the clogging degree to be improved, therefore, to calculate the clogging degree on the basis of only the filter differential pressure acquired when the flow rate condition is satisfied.

Reason 2: The flow rate condition allows the accuracy of the detection of the filter differential pressure by the differential pressure detection unit 51 to be maintained at a high level. When the filter flow rate is small, the filter differential pressure is also small, by which the accuracy of the detection of the filter differential pressure by the differential pressure detection unit 51 is lowered. It allows the accuracy of the calculation of the degree of clogging to be improved, therefore, to adopt only the filter differential pressure acquired when the flow rate condition is satisfied, that is, when the filter flow rate is large, for calculating the degree of clogging.

Reason 3: The flow rate condition facilitates the setting of the differential pressure threshold. Setting the differential pressure threshold on the basis of a state where the filter flow rate is small (for example, when the discharge flow rate of the hydraulic pump 21 is less than the rated flow rate) generates a possibility that the filter differential pressure always exceeds the differential pressure threshold (e.g., the pressure detection switch is always kept "on"), regardless of the degree of clogging of the filter 45, when the filter flow rate is large (for example, when the discharge flow rate of the hydraulic pump 21 is equal to or more than the rated flow rate). Setting the differential pressure threshold on the basis of a state where the filter flow rate is large, conversely, generates a possibility that the filter differential pressure is always kept below the differential pressure threshold, regardless of the degree of clogging, when the filter flow rate is small. These disable the degree of clogging of the filter 45 from being properly calculated. The flow rate condition enables the degree of clogging of the filter 45 to be properly calculated on the basis of the differential pressure threshold that is set with use of a state where the filter flow rate is large to some extent as a reference, that is, enables the time when the filter differential pressure exceeds the differential pressure threshold to be varied in response to the degree of clogging.

The decision on whether or not the flow rate condition is satisfied may be performed either directly or indirectly. Example of the former include that the flow rate condition is decided to be satisfied when the filter flow rate detected by the flow rate detection unit 54 exceeds the flow rate threshold. Examples of the latter include that the flow rate condition is decided to be satisfied when the situation where the filter flow rate is assumed to exceed the flow rate threshold is detected. For example, the following conditions can be set.

(Example 1) The flow rate condition may be that the operation amount detected by the operation amount detection unit 53 (the operation amount applied to the operation unit 52) is equal to or more than a preset operation amount threshold. This condition is based on the premise that the controller 60 performs a control action of changing the discharge flow rate of the hydraulic pump 21 (i.e., changing the filter flow rate) in accordance with the operation amount. The controller 60 preferably stores the operation amount threshold in advance. The operation amount threshold is set, for example, such that the operation amount having a maximum value or a substantially maximum value (for example, when full lever operation or substantially full lever operation is performed) is equal to or more than the operation amount threshold while the operation amount having a value below the maximum value or the substantially maximum value is less than the operation amount threshold.

In the case of application of a plurality of operations to the operation unit 52, the flow rate condition may be either that the operation amount of at least one operation of the plurality of operations is equal to or more than the operation amount threshold or that the operation amount of a preselected one or more operations from the plurality of operations (including the case of all operations) is equal to or more than the operation amount threshold. The plurality of operations, for example, include: an operation for making the lower traveling body 11 perform the traveling motion (including, for example, advancing and retreating of the right crawler and advancing and retreating of the left crawler); an operation for making the upper turning body 13 perform the turning motion (right turning and left turning); and an operation for making the attachment 15 perform the work motion. The operation for making the attachment 15 perform the work motion includes, for example, a boom raising operation, a boom lowering operation, an arm dumping operation, an arm crowding operation, and an operation for rotating the tip attachment 15c (for example, an excavation operation and a dumping operation). In the case of giving a plurality of operation amount thresholds to such a plurality of operations, respectively, the plurality of operation amount thresholds may be either different from each other or equal to each other. For example, in the case of giving respective operation amount thresholds to the boom lowering operation and the arm dumping operation, the operation amount threshold for the boom lowering operation and the operation amount threshold for the arm dumping operation may be either different from each other or equal to each other.

More specifically, the flow rate condition may include that the operation amount of an operation for making a predetermined hydraulic cylinder 33 among the plurality of hydraulic cylinders 33 perform a contraction motion is equal to or more than an operation amount threshold. Since the flow rate of the hydraulic fluid discharged from the head chamber 33h of single rod type and double-action type of the hydraulic cylinder 33 when the hydraulic cylinder 33 performs the contraction motion is larger than the flow rate of the hydraulic fluid discharged from the rod chamber 33r of the hydraulic cylinder 33 when the hydraulic cylinder performs the expansion motion, the filter flow rate is reliably great during the contraction motion of the hydraulic cylinder 33. For example, there can be a case where the filter flow rate when the hydraulic cylinder 33 performs the contraction motion is larger than the flow rate of the hydraulic fluid discharged from the hydraulic pump 21, particularly, than the rated discharge flow rate of the hydraulic pump 21. Examples of the operation for making the hydraulic cylinder 33 perform the contraction motion include, the boom lowering operation, the arm dumping operation, and the opening operation for moving the tip of the tip attachment 15c away from the upper turning body 13. The flow rate condition may include that at least one of the boom lowering operation, the arm dumping operation and the opening operation is performed or that two or more operations thereof are performed.

(Example 2) the flow rate condition may include that the rotation speed of the engine 19 detected by the engine speed detection unit 56 is equal to or more than a predetermined rotation speed threshold. Since the rotational speed of the hydraulic pump 21 is increased with an increase in the rotational speed of the engine 19 (e.g., proportional to the rotational speed of the engine 19), the discharge amount of the hydraulic pump 21 when the rotational speed of the engine 19 is equal to or higher than the rotational speed threshold is larger than that when the rotational speed of the engine 19 is less than the rotational speed threshold, and the filter flow rate is also rendered large. Preferably, the rotational speed threshold is also pre-stored in the controller 60.

The judgment permission condition may include, in addition to the flow rate condition, a condition different from the flow rate condition, preferably, a condition with influence on the filter differential pressure. For example, in addition to the flow rate condition, the judgment permission condition may include that the temperature of hydraulic fluid detected by the hydraulic fluid temperature detection unit 55 is within a predetermined range, for example, equal to or more than a predetermined temperature threshold. That is because a variation in the temperature of hydraulic fluid involves a variation in the viscosity of the hydraulic fluid, resulting in a variation in the differential pressure across the filter. Specifically, even if the degree of clogging of the filter 45 is not varied, the viscosity of hydraulic fluid is increased with a decrease in the temperature of the hydraulic fluid, resulting in an increase in the filter differential pressure. Limiting the period of the judgment of the filter differential pressure to the period during which the temperature of the hydraulic fluid is within a predetermined range (for example, equal to ore more than a temperature threshold), therefore, makes it possible to reduce the influence by the temperature of hydraulic fluid to thereby improve the calculation of the degree of clogging of the filter 45. Preferably, the temperature threshold is also pre-stored in the controller 60.

The judgment permission condition, for example, may be that all of the following conditions [a], [b], [c] and [d] are satisfied.
[a] The temperature of hydraulic fluid is equal to or more than the temperature threshold (e.g., 30°C).
[b] The rotation speed of the engine 19 is equal to or more than the rotation speed threshold.
[c] The operation amount of the arm dumping operation is equal to or more than the operation amount threshold (e.g., a full lever operation or a substantially full lever operation is performed).
[d] The operation amount of the boom lowering operation is equal to or more than the operation amount threshold (e.g., a full lever operation or a substantially full lever operation is performed).

In the flowchart shown in FIG. 3, only when the judgment permission condition is satisfied (YES in step S11), the controller 60 integrates the judgment permission time Ta (step S12; judgment permission time calculation step). The judgment permission time Ta is a time in which the judgment permission condition is satisfied. More specifically, the judgment permission time Ta is an integrated value of the time in which the judgment permission condition is satisfied, within a predetermined measurement period. More specifically, when the judgment permission condition is satisfied, the controller 60 adds a newly measured judgment permission time Ta to the judgment permission time Ta that has already been accumulated within a predetermined measurement period. The "measurement period" is set, for example, based on the cumulative operation time of the work machine 10, specifically, the time measured by an hour meter. For example, each time the measurement value provided by the hour meter reaches an integer multiple of a predetermined time (e.g., 10 hours, 30 hours), the current measurement period ends and the next measurement period is started. For example, the controller 60 sets the judgment permission time Ta and the judgment target time Tb detailed later to zero (that is, resets) each time a new measurement period starts.

In step S13, the controller 60 acquires the filter differential pressure detected by the differential pressure detection unit 51 (differential pressure acquisition step), and judges whether or not the differential pressure across the filter exceeds the differential pressure threshold (in the present embodiment, whether or not the pressure detection switch is "ON") (differential pressure judgment step). If the filter differential pressure exceeds the differential pressure threshold (YES in step S13), the controller 60 integrates the judgment target time Tb (step S14; the judgment target time calculation step). The judgment target time Tb is the integrated value of the time in which the judgment permission condition is satisfied and the filter differential pressure detected by the differential pressure detection unit 51 (i.e., the differential pressure acquired by the controller 60) exceeds the differential pressure threshold. More specifically, the judgment target time Tb according to the embodiment is an accumulation (total time) of a time in which the judgment permission condition is satisfied and the filter differential pressure detected by the differential pressure detection unit 51 exceeds the differential pressure threshold within the measurement period. Specifically, the controller 60 adds the newly measured judgment target time Tb to the judgment target time Tb that has already been accumulated within a predetermined measurement period only when the judgment permission condition is satisfied and the filter differential pressure detected by the differential pressure detection unit 51 exceeds the differential pressure threshold.

The controller 60 is preferably configured to store the type of the motion that the work machine 10 is performing (e.g., boom lowering motion, arm dumping motion) when the judgment permission condition is satisfied and the filter differential pressure exceeds the differential pressure threshold. Such stored information is useful for the analysis of the motion that is likely to cause clogging in the filter 45 (useful for identification of the cause of clogging).

The controller 60 (in the present embodiment, the work machine control unit 61) performs respective integrations of the judgment permission time Ta and the judgment target time Tb until the satisfaction of a preset transmission condition is satisfied (NO in step S15) and, at the time when the transmission condition is satisfied (step S15), transmits information including the judgment permission time Ta and the judgment target time Tb to an external device (transmission step). The transmission condition can be set variously. For example, the transmission condition may include a condition associated with time. For example, the transmission condition may include at least one condition selected from (a) that it is a time at which the work machine 10 is assumed to perform no operation (generally a predetermined time at night), (b) that a measurement value provided by the hour meter of the work machine 10 exceeds a predetermined value, and (c) that an operation by an operator (screen operation, button operation, etc.) has been performed.

What the information in step S16 is transmitted to is the external control unit in the present embodiment. The work machine control unit 61 may transmit not only information about the judgment permission time Ta and the judgment target time Tb but also information about the clogging degree calculated based thereon. The work machine control unit 61, alternatively, may transmit the current measurement value provided by the hour meter of the work machine 10 to the external control unit. The work machine control unit 61, alternatively, may transmit the type of motion performed by the work machine 10 when the judgment permission condition is satisfied and the differential pressure across the filter exceeds the differential pressure threshold.

In step S21, the controller 60 (the external control unit in the present embodiment) calculates the clogging degree (clogging degree calculation step). The "clogging degree" is an index that indicates the degree of clogging of the filter 45. The clogging degree is calculated based on a comparison between the judgment permission time Ta and the judgment target time Tb.

The reason why the controller 60 should calculate the clogging degree based on the judgment permission time Ta and the judgment target time Tb is as follows. With the progress of the clogging of the filter 45 and with an increase in the filter flow, the filter differential pressure is increased. Even when the clogging of the filter 45 is relatively small to require no replacement of the filter 45, the increase in the filter flow rate (e.g., 1.5 times or more of the rated discharge flow rate of the hydraulic pump 21) may cause the filter differential pressure to exceed the differential pressure threshold. Thereafter, along with the progress of the clogging of the filter 45, the filter flow rate at the time when the filter differential pressure exceeds the differential pressure threshold is decreased (e.g., from 1.5 times the rated discharge flow rate of the hydraulic pump 21 to 1.4 times, 1.3 times...). In summary, the progress of the clogging of the filter 45 renders it likely to occur that the judgment permission condition is satisfied and the filter differential pressure exceeds the differential pressure threshold (YES in steps S11 and S13) likely to occur, rendering the judgment target time Tb likely to be long.

On the other hand, even with the same degree of clogging of the filter 45, the longer the time in which the judgment permission condition is satisfied, the more likely to be long the judgment target time Tb is. Thus, there can occur a case where the degree of clogging of the filter 45 cannot be accurately calculated based on only the judgment target time Tb. In contrast, in consideration with not only the judgment target time Tb but also the judgment permission time Ta in which the judgment permission condition is satisfied, the degree of clogging of the filter 45 can be accurately calculated.

In the present embodiment, the clogging degree is the ratio of the judgment target time Tb to the judgment permission time Ta, that is, a value acquired by dividing the judgment target time Tb by the judgment permission time Ta (=Tb/Ta). The calculation of the clogging degree may involve of the correction (e.g., addition, subtraction, multiplication, or division of a correction value) on at least one of the judgment permission time Ta and the judgment target time Tb. Alternatively, the correction (addition, subtraction, multiplication, or division of the correction value) may be applied to the ratio of the judgment target time Tb to the judgment permission time Ta (= Tb/Ta).

The timing at which the controller 60 calculates the degree of clogging can be set variously. For example, the controller 60 may calculate the degree of clogging every time the "measurement period" ends (e.g., each time the measurement value provided by the hour meter reaches 30 hours). Alternatively, the controller 60 may calculate the clogging degree every time the judgment permission time Ta becomes a predetermined time. The controller 60 (e.g., the external device control unit) may, alternatively, calculate the degree of clogging each time the information about the judgment permission time Ta and the judgment target time Tb is transmitted from the work machine control unit 61.

In step S22, the controller 60 makes the display unit 71 display information about the clogging degree (display step). FIG. 4 shows an example of display provided by the display unit 71. In this example, displayed is the relationship between the elapsed time (e.g., a measurement value provided by the hour meter of the work machine 10, etc.) and the clogging degree. This display allows an operator looking at the display to easily grasp a change with time in the clogging degree (tend to rise), thereby allowing the operator to easily decide the timing of the replacement of the filter 45.

The information displayed by the display unit 71 may be either the clogging degree itself calculated by the controller 60 or a value calculated on the basis of the clogging degree. In the example shown in FIG. 4, the display unit 71 displays, as the information on the clogging degree (= Tb/Ta) calculated by the controller 60, Tb/Ta × 100 [%] and clogging levels (L1 to L4) corresponding thereto. It may be allowed to display only the clogging level without displaying the clogging degree itself.

In the example shown in FIG. 4, the clogging degree is displayed in a bar graph. The clogging degree may be displayed in a polygonal line graph. Alternatively, may be displayed the numerical value of the clogging degree itself.

In the example shown in FIG. 4, the display unit 71 displays the clogging degree during each "measurement period" (e.g., every 30 hours at the value of the hour meter). The longitudinal axis of the graph representing the information about the clogging degree indicates (Tb/Ta) × 100 [%] (clogging ratio), and the horizontal axis indicates the operating time of the work machine 10. In this example, the display unit 71 displays the clogging degree in a bar graph each measurement period. In this example, the display unit 71 further displays at least one polygonal line graph that is a moving average line in a predetermined period longer than the measurement period, specifically, a plurality of (two) polygonal line graphs which correspond to different "predetermined periods", respectively.

In step S23, the controller 60 discriminates which level of the plurality of clogging levels the current or latest clogging degree belongs to (clogging level discrimination step). The plurality of clogging levels are stored in the controller 60 in advance. The plurality of clogging levels illustrated in FIG. 4 include levels of four stages, namely, L1, L2, L3, L4, wherein: the level L1 is a level in which the clogging degree is 0% or more and less than 20%; the level L2 is a level in which the clogging degree is 20% or more and less than 40%; the clogging degree is a level in which the clogging degree is 40% or more and less than 60%; and the level L4 is the highest level in which the clogging degree is 60% or more (100% or less) to require the filter 45 to be replaced. Variously settable are the number of the plurality of clogging levels, the clogging degree belonging to each level, the positioning of each level (e.g., "the filter 45 should be replaced", etc.).

In the example shown in FIG. 4, the display unit 71 displays the relationship between the clogging degree and the clogging level (L1 to L4) in a graph showing the clogging degree. Specifically, the display unit 71 displays respective ranges of clogging degree corresponding to the clogging levels (L1 to L4). The graphs shown in FIG. 4 may be color coded in accordance with the clogging levels (L1 to L4). Alternatively, the display unit 71 may display the clogging level to which the current or latest clogging degree belongs by a letter or graphic other than graph.

In step S23, there is a possibility that the controller 60 makes the notification unit 73 make a notification based on the clogging level (notification step). Specifically, as shown in FIG. 4, the controller 60 stores a plurality of clogging degree thresholds T1, T2, T3 that are predetermined thresholds with respect to the magnitude of the clogging degree and different from each other. Each of the clogging degree thresholds may be either a threshold of a value corresponding to the clogging degree (for example, Tb/Ta × 100) or a threshold of the clogging degree itself (= Tb/Ta). The specific values and the number (stages) of the plurality of clogging degree thresholds can be set variously. Each of the clogging degree thresholds shown in FIG. 4 is a value that is a boundary between adjacent clogging levels; the plurality of clogging degree thresholds T1, T2, T3 are 20%, 40%, and 60%, respectively.

The controller 60 makes the notification unit 73 notify the notification unit 73 each time the clogging degree (current or latest clogging degree) calculated by the controller 60 reaches each of the clogging degree thresholds T1, T2, T3 (notification step). The notification by the notification unit 73 is, thus, performed stepwise with an increase in the clogging degree of the filter 45 with the progress of time. Such a notification allows an operator to easily decide the replacement timing of the filter 45. In the case where the clogging degree reach a certain clogging degree threshold (e.g., T1), thereafter decrease to become less than the clogging degree threshold, and re-reach the certain clogging degree threshold, the controller 60 may either or not make the notification unit 73 perform a re-notification.

The embodiments described above can be variously modified. For example, the connections between the components shown in FIG. 2 may be changed. For example, the order of the steps of the flowchart shown in FIG. 3 may be changed and/or some of the steps may be omitted. For example, thresholds, ranges, etc. may be either constant or varied by manual operation or automatically varied depending on some conditions. For example, the number of components may be changed and some of the components does not have to be provided. For example, what is described as a plurality of members or parts that are different from each other may be replaced with one member or part. For example, what is described as one member or part may be divided into a plurality of members or parts that are different from each other. For example, each component may have only a part of each feature (action function, arrangement, actuation, etc.).

For example, the controller 60 may change each of the thresholds (differential pressure threshold, flow rate threshold, operation amount threshold, clogging degree threshold, etc.) in accordance with the temperature of hydraulic fluid (the temperature detected by the hydraulic fluid temperature detection unit 55) or the like.

The controller 60 may change the threshold according to the content of the work performed by the work machine 10 or the like. That is because the filter flow rate and the filter differential pressure corresponding thereto may be varied depending on the content of the work by the work machine 10.

Thus are provided a clogging calculation system, a clogging calculation method, and a clogging calculation program, each of which is capable of accurately calculating the degree of clogging of a filter with reduced amount of data to be handled. The filter allows hydraulic fluid for operating a hydraulic actuator of the work machine to pass therethrough.

The clogging calculation system includes a differential pressure detector and a controller. The differential pressure detector detects a filter differential pressure, which is a differential pressure across the filter. The controller stores a judgment permission condition. The judgment permission condition includes a flow rate condition that a flow rate of hydraulic fluid passing through the filter exceeds a predetermined flow rate threshold. The controller calculates a judgment permission time and a judgment target time. The judgment permission time is an integrated value of time in which the judgment permission condition is satisfied. The judgment target time is an integrated value of time in which the judgment permission condition is satisfied and the differential pressure detected by the differential pressure detection unit exceeds a predetermined differential pressure threshold. The controller calculates a clogging degree, which indicates a degree of clogging of the filter, based on the judgment permission time and the judgment target time.

Since the controller thus calculates the clogging degree with adoption of only the filter differential pressure when the judgment permission condition is satisfied, the amount of data required for calculating the clogging degree, that is, the amount of data handled by the controller, can be reduced as compared with the case of always acquiring and adopting the information on the filter differential pressure detected during the operation of the work machine.

The judgment permission condition, which includes the flow rate condition that the filter flow rate exceeds a predetermined flow rate threshold, allows the clogging degree to be accurately calculated by use of only the information on the filter differential pressure within a state where a filter flow rate is large and therefore stable.

The clogging degree of the filter can be properly calculated based on the judgment target time, which is likely to be increased with an increase in the clogging degree. On the other hand, since the judgment target time can be kept long even if the filter flow rate is large to render the judgment permission time long, the comparison between the judgment permission time and the judgment target time allows the clogging degree to be calculated with higher accuracy.

The calculation of judgment target time, which requires nothing except for the judgment on whether or not the filter differential pressure exceeds a predetermined differential pressure threshold, eliminates the necessity of storing information on the specific value of the filter differential pressure itself. This also contributes the reduced amount of data required for calculation of the clogging degree.

The reduction in the amount of data handled by the controller allows, for example, the required capacity of storage section or storage media in the controller 60 to be small and allows the processing time required for control to be short. Moreover, if the data handled by the controller is brought into communication, the amount of communication and the cost thereon can be saved. Besides, the calculation of the clogging degree with high accuracy allows an operator to decide the timing of replacement of the filter properly and easily.

The clogging degree is, for example, a ratio of the judgment target time Tb to the judgment permission time. Such a clogging degree can be accurately calculated by a simple operation.

Preferably, the clogging judgment system further includes a display unit, which displays a relationship between information on the clogging degree and time. The display by the display unit allows an operator to easily grasp the tendency of increase in the clogging degree along with the progress of time, thereby allowing the operator to easily decide the replacement timing of the filter.

Preferably, the clogging judgment system further includes a notification unit that performs a notification, wherein the controller stores a plurality of clogging degree thresholds that are predetermined thresholds related to a magnitude of the clogging degree and different from each other, and is configured to make the notification unit perform a notification each time the information on the clogging degree calculated by the controller reaches the plurality of clogging degree thresholds. The notification by the notification unit allows an operator to easily grasp the tendency of increase in the clogging degree, thereby allowing the operator to easily decide the replacement timing of the filter.

The clogging calculation system can be applied to a work machine including a lower traveling body, an upper turning body, an attachment, and an operation unit. The lower traveling body is capable of performing a traveling motion. The upper turning body is mounted on the lower traveling body capably of performing a turning motion of turning with respect to the lower traveling body. The attachment is attached to the upper turning body capably of performing a work motion. The hydraulic actuator is configured to make at least one of the traveling motion of the lower traveling body, the turning motion of the upper turning body, and the work motion of the attachment be performed, and the operation unit allows an operation for operating the hydraulic actuator to be applied to the operation unit. In this mode, it is preferable that the judgment permission condition includes that the operation amount of the operation applied to the operation unit is equal to or more than a preset operation amount threshold. This makes it possible to decide whether or not the judgment permission condition is satisfied on the basis of an operation amount of the operation unit which is equipped in a typical work machine, thereby allowing a special sensor for deciding whether or not the judgment permission condition is satisfied to be reduced or omitted.

In a case where the hydraulic actuator includes a single rod type and double acting type of expandable hydraulic cylinder, preferable is that the judgment permission condition includes that an operation amount of an operation for making the hydraulic cylinder perform a contraction motion among the operations applied to the operation unit is equal to or more than the operation amount threshold. In the single rod type and the double acting type of hydraulic cylinder, the flow rate of the hydraulic fluid discharged during the contraction motion performed by the hydraulic cylinder is larger than the flow rate of the hydraulic fluid discharged from the hydraulic cylinder during the expansion motion performed by the hydraulic cylinder; therefore, the judgment permission condition including that the operation amount of the operation for making the hydraulic cylinder perform the contraction motion is equal to or more than the operation amount threshold permits only a time in which the filter flow rate is reliably large to be integrated into the judgment permission time, thereby enabling the controller to calculate the clogging degree more accurately.

In a case where the work machine includes a hydraulic pump that supplies hydraulic fluid to the hydraulic actuator and an engine that drives the hydraulic pump, it is preferable that the judgment permission condition includes that a rotation speed of the engine is equal to or more than a predetermined rotation speed threshold. Since an increase in the rotation speed of the hydraulic pump increases the discharge amount of the hydraulic fluid of the hydraulic pump to increase the filter flow rate corresponding thereto, the judgment permission condition including that the rotation speed of the engine is equal to or more than a predetermined rotation speed threshold permits only a time in which the filter flow rate is reliably large, that is, in which the filter differential pressure can be easily secured, to be integrated into the judgment permission time, thereby enabling the controller to calculate the clogging degree more accurately.

The clogging calculation method is a method for calculating a degree of clogging of the filter, including: a differential pressure acquisition step of acquiring the filter differential pressure; a judgment permission time calculation step of calculating the judgment permission time; a judgment target time calculation step of calculating the judgment target time; and a clogging degree calculation step of calculating the clogging degree based on a comparison between the judgment permission time and the judgment target time.

The clogging calculation program is a program that makes a computer execute the differential pressure acquisition step, the judgment permission time calculation step, the judgment target time calculation step, and the clogging degree calculation step.

The recording medium is a medium with the program that is recorded thereon and readable by a computer.

## Claims

1. A clogging calculation system for calculating a degree of clogging of a filter (45) through which hydraulic fluid for operating a hydraulic actuator (31A, 31B, 33) of a work machine (10) passes, comprising:
a differential pressure detection unit (51) that detects a filter differential pressure that is a differential pressure across the filter (45); and
a controller (60), wherein
the controller (60) is configured to perform:
storing a judgment permission condition that includes a flow rate condition that a flow rate of hydraulic fluid passing through the filter (45) exceeds a predetermined flow rate threshold;
calculating a judgment permission time (Ta), which is an integrated value of time in which the judgment permission condition is satisfied;
calculating a judgment target time (Tb), which is an integrated value of time in which the judgment permission condition is satisfied and the differential pressure detected by the differential pressure detection unit (51) exceeds a predetermined differential pressure threshold; and
calculating a clogging degree, which indicates a degree of clogging of the filter (45), based on a comparison between the judgment permission time (Ta) and the judgment target time (Tb).

2. The clogging calculation system according to claim 1, wherein the clogging degree is a ratio of the judgment target time (Tb) to the judgment permission time (Ta).

3. The clogging calculation system according to claim 1 or 2, further comprising a display unit (71) that displays a relationship between information about the clogging degree and time.

4. The clogging calculation system according to any one of claims 1 to 3, further comprising a notification unit (73) capable of performing a notification, wherein the controller (60) stores a plurality of clogging degree thresholds that are predetermined thresholds related to a magnitude of the clogging degree and different from each other, and the controller (60) is configured to make the notification unit (73) perform a notification each time the information on the clogging degree calculated by the controller (60) reaches the plurality of clogging degree thresholds.

5. The clogging calculation system according to any one of claims 1 to 4, wherein the work machine (10) includes: a lower traveling body (11) capable of performing a traveling motion; an upper turning body (13) mounted on the lower traveling body (11) capably of performing a turning motion of turning with respect to the lower traveling body (11); an attachment (15) attached to the upper turning body (13) capably of performing a work motion; and an operation unit (52), wherein the hydraulic actuator (31A, 31B, 33) makes at least one of the traveling motion of the lower traveling body (11), the turning motion of the upper turning body (13), and the work motion of the attachment (15) be performed, and wherein the operation unit (52) allows an operation for operating the hydraulic actuator (31A, 31B, 33) to be applied to the operation unit (52), the judgment permission condition including that an operation amount of the operation applied to the operation unit (52) is equal to or more than a preset operation amount threshold.

6. The clogging calculation system according to claim 5, wherein the hydraulic actuator (31A, 31B, 33) includes a single-rod type and double-acting type of expandable hydraulic cylinder, and the judgment permission condition includes that an operation amount of an operation for making the hydraulic cylinder perform a contraction motion among the operations applied to the operation unit (52) is equal to or more than the operation amount threshold.

7. The clogging calculation system according to any of claims 1 to 6, wherein the work machine (10) includes a hydraulic pump that supplies hydraulic fluid to the hydraulic actuator, and an engine that drives the hydraulic pump, the judgment permission condition including that a rotation speed of the engine is equal to or more than a predetermined rotation speed threshold.

8. A method for calculating a degree of clogging of a filter (45) through which hydraulic fluid for operating a hydraulic actuator (31A, 31B, 33) of a work machine (10) passes, comprising:
a differential pressure acquisition step of acquiring, by a differential pressure detection unit (51), a filter differential pressure that is a differential pressure across the filter (45);
a judgment permission time calculation step of calculating, by a controller (60), a judgment permission time (Ta) which is an integrated value of time in which a judgment permission condition including a flow rate condition that a flow rate of hydraulic fluid passing through the filter (45) exceeds a predetermined flow rate threshold is satisfied;
a judgment target time calculation step of calculating, by the controller (60), a judgment target time (Tb) that is an integrated value of time in which the judgment permission condition is satisfied and the filter differential pressure acquired in the differential pressure acquisition step exceeds a predetermined differential pressure threshold; and
a clogging degree calculation step of calculating, by the controller (60), a clogging degree that indicates a degree of clogging of the filter (45) on the basis of a comparison between the judgment permission time (Ta) and the judgment target time (Tb).

9. A computer program comprising instructions to cause the system of claim 1 to execute the steps of the method of claim 8.

10. A computer-readable medium having stored thereon the computer program of claim 9.

## Patentansprüche

1. Verstopfungsberechnungssystem zum Berechnen eines Verstopfungsgrades eines Filters (45), durch den Hydraulikfluid zum Betreiben eines Hydraulikaktuators (31A, 31B, 33) einer Arbeitsmaschine (10) fließt, mit Folgendem:
einer Differenzdruckerfassungseinheit (51), die einen Filterdifferenzdruck erfasst, der ein Differenzdruck über den Filter (45) ist; und
einer Steuereinheit (60), wobei
die Steuereinheit (60) konfiguriert ist, um Folgendes auszuführen:
Speichern einer Beurteilungszulassungsbedingung, die eine Durchflussratenbedingung aufweist, wonach eine Durchflussrate der durch den Filter (45) fließenden Hydraulikflüssigkeit einen vorbestimmten Durchflussratenschwellenwert überschreitet;
Berechnen einer Beurteilungszulassungszeit (Ta), die ein integrierter Wert der Zeit ist, in der die Beurteilungsfreigabebedingung erfüllt ist;
Berechnen einer Beurteilungszielzeit (Tb), die ein integrierter Wert der Zeit ist, in der die Beurteilungszulassungsbedingung erfüllt ist und der von der Differenzdruckerfassungseinheit (51) erfasste Differenzdruck einen vorbestimmten Differenzdruckschwellenwert überschreitet; und
Berechnen eines Verstopfungsgrades, der einen Verstopfungsgrad des Filters (45) basierend auf einem Vergleich zwischen der Beurteilungszulassungszeit (Ta) und der Beurteilungszielzeit (Tb) angibt.

2. Verstopfungsberechnungssystem gemäß Anspruch 1, wobei der Verstopfungsgrad ein Verhältnis der Beurteilungszielzeit (Tb) zur Beurteilungszulassungszeit (Ta) ist.

3. Verstopfungsberechnungssystem gemäß Anspruch 1 oder 2, mit ferner einer Anzeigeeinheit (71), die eine Beziehung zwischen Informationen über den Verstopfungsgrad und der Zeit anzeigt.

4. Verstopfungsberechnungssystem gemäß einem der Ansprüche 1 bis 3, das ferner eine Benachrichtigungseinheit (73) umfasst, die eine Benachrichtigung ausführen kann, wobei die Steuereinheit (60) eine Vielzahl von Verstopfungsgradschwellenwerten speichert, die vorbestimmte Schwellenwerte sind, die sich auf eine Größe des Verstopfungsgrades beziehen und sich voneinander unterscheiden, und die Steuereinheit (60) konfiguriert ist, um die Benachrichtigungseinheit (73) jedes Mal eine Benachrichtigung ausführen zu lassen, wenn die von der Steuereinheit (60) berechneten Informationen über den Verstopfungsgrad die Vielzahl von Verstopfungsgradschwellenwerten erreichen.

5. Verstopfungsberechnungssystem gemäß einem der Ansprüche 1 bis 4, wobei die Arbeitsmaschine (10) Folgendes umfasst: einen unteren Fahrkörper (11), der eine Fahrbewegung ausführen kann; einen oberen Drehkörper (13), der auf dem unteren Fahrkörper (11) angebracht ist und eine Drehbewegung in Bezug auf den unteren Fahrkörper (11) ausführen kann; ein am oberen Drehkörper (13) befestigtes Anbaugerät (15), das eine Arbeitsbewegung ausführen kann; und eine Bedieneinheit (52), wobei der hydraulische Aktuator (31A, 31B, 33) mindestens eine der folgenden Bewegungen ausführt: die Fahrbewegung des unteren Fahrkörpers (11), die Drehbewegung des oberen Drehkörpers (13) und die Arbeitsbewegung des Anbaugeräts (15), und wobei die Betätigungseinheit (52) eine Betätigung zum Betätigen des hydraulischen Stellantriebs (31A, 31B, 33) zulässt, die auf die Betätigungseinheit (52) angewendet wird, wobei die Beurteilungszulassungsbedingung umfasst, dass ein Betätigungsbetrag der auf die Betätigungseinheit (52) angewendeten Betätigung gleich oder größer als ein voreingestellter Betätigungsbetragsschwellenwert ist.

6. Verstopfungsberechnungssystem gemäß Anspruch 5, wobei der hydraulische Aktuator (31A, 31B, 33) einen einstufigen und doppeltwirkenden ausfahrbaren Hydraulikzylinder umfasst und die Beurteilungszulassungsbedingung beinhaltet, dass ein Betätigungsbetrag einer Betätigung, um den Hydraulikzylinder eine Kontraktionsbewegung ausführen zu lassen, unter den auf die Betätigungseinheit (52) ausgeübten Betätigungen gleich oder größer als der Betätigungsbetragsschwellenwert ist.

7. Verstopfungsberechnungssystem gemäß einem der Ansprüche 1 bis 6, wobei die Arbeitsmaschine (10) eine Hydraulikpumpe, die dem hydraulischen Aktuator Hydraulikfluid zuführt, und einen Motor, der die Hydraulikpumpe antreibt, umfasst, wobei die Beurteilungszulassungsbedingung umfasst, dass eine Drehzahl des Motors gleich oder größer als ein vorbestimmter Drehzahlschwellenwert ist.

8. Verfahren zum Berechnen eines Verstopfungsgrades eines Filters (45), durch den Hydraulikfluid zum Betreiben eines hydraulischen Stellglieds (31A, 31B, 33) einer Arbeitsmaschine (10) fließt, mit:
einem Differenzdruckerfassungsschritt zum Erfassen eines Filterdifferenzdrucks, der ein Differenzdruck über den Filter (45) ist, durch eine Differenzdruckerfassungseinheit (51);
einen Schritt zum Berechnen einer Beurteilungszulassungszeit, bei dem durch eine Steuereinheit (60) eine Beurteilungszulassungszeit (Ta) berechnet wird, die ein integrierter Wert der Zeit ist, in der eine Beurteilungszulassungsbedingung einschließlich einer Durchflussratenbedingung erfüllt ist, dass eine Durchflussrate der durch den Filter (45) strömenden Hydraulikflüssigkeit einen vorbestimmten Durchflussratenschwellenwert überschreitet;
einen Schritt zum Berechnen einer Beurteilungszielzeit, bei dem durch die Steuereinheit (60) eine Beurteilungszielzeit (Tb) berechnet wird, die ein integrierter Wert der Zeit ist, in der die Beurteilungszulassungsbedingung erfüllt ist und der im Schritt zum Erfassen des Differenzdrucks erfasste Filterdifferenzdruck einen vorbestimmten Differenzdruckschwellenwert überschreitet; und
einen Verstopfungsgradberechnungsschritt zum Berechnen eines Verstopfungsgrades, der einen Verstopfungsgrad des Filters (45) basierend auf einem Vergleich zwischen der Beurteilungszulassungszeit (Ta) und der Beurteilungszielzeit (Tb) angibt, durch die Steuereinheit (60).

9. Computerprogramm mit Anweisungen, um das System nach Anspruch 1 zu veranlassen, die Schritte des Verfahrens nach Anspruch 8 auszuführen.

10. Computerlesbares Medium, auf dem das Computerprogramm nach Anspruch 9 gespeichert ist.

## Revendications

1. Système de calcul de colmatage destiné à calculer un degré de colmatage d'un filtre (45) à travers lequel passe un fluide hydraulique servant à opérer un actionneur hydraulique (31A, 31B, 33) d'une machine de travail (10), comprenant :
une unité de détection de pression différentielle (51) qui détecte une pression différentielle du filtre qui est une pression différentielle à travers le filtre (45) ; et
un contrôleur (60), dans lequel
le contrôleur (60) est configuré pour effectuer :
le stockage d'une condition d'autorisation de jugement qui comporte une condition de taux de débit selon laquelle un taux de débit de fluide hydraulique passant à travers le filtre (45) dépasse un seuil de taux de débit prédéterminé ;
le calcul d'un temps d'autorisation de jugement (Ta), qui est une valeur intégrée du temps pendant lequel la condition d'autorisation de jugement est satisfaite ;
le calcul d'un temps cible de jugement (Tb), qui est une valeur intégrée du temps pendant lequel la condition d'autorisation de jugement est satisfaite et la pression différentielle détectée par l'unité de détection de pression différentielle (51) dépasse un seuil de pression différentielle prédéterminé ; et
le calcul d'un degré d'encrassement, qui indique un degré de colmatage du filtre (45), sur la base d'une comparaison entre le temps d'autorisation de jugement (Ta) et le temps cible de jugement (Tb).

2. Système de calcul de colmatage selon la revendication 1, dans lequel le degré de colmatage est un rapport entre le temps cible de jugement (Tb) et le temps d'autorisation de jugement (Ta).

3. Système de calcul de colmatage selon la revendication 1 ou 2, comprenant en outre une unité d'affichage (71) qui affiche une relation entre des informations sur le degré de colmatage et le temps.

4. Système de calcul de colmatage selon l'une quelconque des revendications 1 à 3, comprenant en outre une unité de notification (73) capable d'effectuer une notification, dans lequel le contrôleur (60) stocke une pluralité de seuils de degré de colmatage qui sont des seuils prédéterminés liés à une ampleur du degré de colmatage et différents les uns des autres, et le contrôleur (60) est configuré pour faire en sorte que l'unité de notification (73) effectue une notification chaque fois que les informations sur le degré de colmatage calculées par le contrôleur (60) atteignent la pluralité de seuils de degré de colmatage.

5. Système de calcul de colmatage selon l'une quelconque des revendications 1 à 4, dans lequel la machine de travail (10) comporte : un corps mobile inférieur (11) capable d'effectuer un mouvement de déplacement ; un corps rotatif supérieur (13) monté sur le corps mobile inférieur (11) et capable d'effectuer un mouvement de rotation par rapport au corps mobile inférieur (11) ; un accessoire (15) fixé au corps pivotant supérieur (13) capable d'effectuer un mouvement de travail ; et une unité de commande (52), dans lequel l'actionneur hydraulique (31A, 31B, 33) effectue au moins l'un parmi le mouvement de déplacement du corps mobile inférieur (11), le mouvement de rotation du corps pivotant supérieur (13), et le mouvement de travail de l'accessoire (15), et dans lequel l'unité de commande (52) permet à une opération destinée à actionner l'actionneur hydraulique (31A, 31B, 33) d'être appliquée à l'unité de commande (52), la condition d'autorisation de jugement incluant le fait que la quantité d'actionnement appliquée à l'unité de commande (52) est égale ou supérieure à un seuil de quantité d'actionnement prédéfini.

6. Système de calcul de colmatage selon la revendication 5, dans lequel l'actionneur hydraulique (31A, 31B, 33) comporte un vérin hydraulique extensible de type à tige unique et à double effet, et la condition d'autorisation de jugement comporte le fait qu'une quantité d'actionnement d'une opération visant à faire effectuer au vérin hydraulique un mouvement de contraction parmi les opérations appliquées à l'unité d'opération (52) est égale ou supérieure au seuil de quantité d'opération.

7. Système de calcul de colmatage selon l'une quelconque des revendications 1 à 6, dans lequel la machine de travail (10) comporte une pompe hydraulique qui alimente le vérin hydraulique en fluide hydraulique, et un moteur qui entraîne la pompe hydraulique, la condition d'autorisation de jugement comportant le fait qu'une vitesse de rotation du moteur est égale ou supérieure à un seuil de vitesse de rotation prédéterminé.

8. Procédé de calcul du degré de colmatage d'un filtre (45) à travers lequel passe le fluide hydraulique destiné à opérer un actionneur hydraulique (31A, 31B, 33) d'une machine de travail (10), comprenant :
une étape d'acquisition de la pression différentielle consistant à acquérir, à l'aide d'une unité de détection de pression différentielle (51), une pression différentielle du filtre qui est une pression différentielle à travers le filtre (45) ;
une étape de calcul du temps d'autorisation de jugement consistant à calculer, à l'aide d'un contrôleur (60), un temps d'autorisation de jugement (Ta) qui est une valeur intégrée du temps pendant lequel une condition d'autorisation de jugement, y compris une condition de taux de débit selon laquelle le taux de débit du fluide hydraulique passant à travers le filtre (45) dépasse un seuil de taux de débit prédéterminé, est satisfaite ;
une étape de calcul du temps cible de jugement consistant à calculer, à l'aide du contrôleur (60), un temps cible de jugement (Tb) qui est une valeur intégrée du temps pendant lequel la condition d'autorisation de jugement est satisfaite et la pression différentielle du filtre acquise lors de l'étape d'acquisition de la pression différentielle dépasse un seuil de pression différentielle prédéterminé ; et
une étape de calcul du degré de colmatage consistant à calculer, à l'aide du contrôleur (60), un degré de colmatage qui indique le degré de colmatage du filtre (45) sur la base d'une comparaison entre le temps d'autorisation de jugement (Ta) et le temps cible de jugement (Tb).

9. Programme informatique comprenant des instructions pour amener le système de la revendication 1 à exécuter les étapes du procédé de la revendication 8.

10. Support lisible par ordinateur sur lequel est stocké le programme informatique de la revendication 9.
